(19) Europäisches Patentamt
European Patent Office
Office européen des brevets

(11) Veröffentlichungsnummer: 0 256 461 B1

(12) EUROPÄISCHE PATENTSCHRIFT

(45) Veröffentlichungstag der Patentschrift: 02.01.91 Patentblatt 91/01

(51) Int. Cl.[5]: C08L 67/02, C08L 69/00, C08K 5/42, C08K 5/41

(21) Anmeldenummer: 87111499.7

(22) Anmeldetag: 08.08.87

(54) **Thermoplastische Formmassen aus Polyester und Polycarbonat.**

Die Akte enthält technische Angaben, die nach dem Eingang der Anmeldung eingereicht wurden und die nicht in dieser Patentschrift enthalten sind.

(30) Priorität: 09.08.86 DE 3627131

(43) Veröffentlichungstag der Anmeldung: 24.02.88 Patentblatt 88/08

(45) Bekanntmachung des Hinweises auf die Patenterteilung: 02.01.91 Patentblatt 91/01

(84) Benannte Vertragsstaaten: BE DE FR GB NL

(56) Entgegenhaltungen:
EP-A- 0 180 648
DE-B- 1 469 143
US-A- 4 391 954

(73) Patentinhaber: BASF Aktiengesellschaft
Carl-Bosch-Strasse 38
D-6700 Ludwigshafen (DE)

(72) Erfinder: Lausberg, Dietrich, Dr.
Nachtigalstrasse 32a
D-6700 Ludwigshafen (DE)
Erfinder: McKee, Graham Edmund, Dr.
Kastanienweg 8
D-6940 Weinheim (DE)
Erfinder: Taubitz, Christof, Dr.
In der Dreispitz 15
D-6706 Wachenheim (DE)
Erfinder: Wassmuth, Georg, Dr.
Von-Sturmfeder-Strasse 60
D-6700 Ludwigshafen (DE)
Erfinder: Knoll, Manfred
Pfrimmstrasse 1
D-6521 Wachenheim (DE)

EP 0 256 461 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, enthaltend als wesentliche Komponenten

A) 10 bis 89,99 Gew.% eines Polyesters

B) 10 bis 89,99 Gew.% eines Polycarbonats,

$C_1$) 0,01 bis 1 Gew.% einer niedermolekularen organischen Verbindung mit bis zu 70 C-Atomen und (-$SO_3$)H oder -$OSO_3$H-Gruppen, und/oder

$C_2$) 0,01 bis 30 Gew.% eines Polymeren mit Sulfonsäuregruppen und einem Gewichtsmittel des Molekulargewichts von mindestens 1000,

sowie als weitere Komponente

D) 0 bis 30 Gew.% eines schlagzäh modifizierenden Kautschuks

Weiterhin betrifft die Erfindung die Verwendung der erfindungsgemäßen Formmassen zur Herstellung von Formkörpern und die daraus erhältlichen Formkörper.

Mischungen aus Polyestern und Polycarbonaten sind aus der DE-A-24 17 002 bekannt. Diese weisen gegenüber den reinen Polyestern verbesserte mechanische Eigenschaften auf.

Der Zusatz von Polymerisaten mit einer Glasübergangstemperatur von unter 0°C, z.B. Pfropfkautschuken auf Acrylat-, Ethylen-, oder Butadienbasis, zu Polyester/Polycarbonat-Mischungen ist aus den EP-A-25 920, WO 80/972, EP-A-114 288, DE-A-23 43 609, US-A-4 172 859, DE-A-33 10 754 und DE-A-32 27 028 bekannt.

Aus der US-A 4 391 954 sind thermoplastische Formmassen aus Polycarbonaten und Polyestern, die sich von Cyclohexandimethanol ableiten, bekannt, die als Flammschutzmittel Alkali- oder Erdalkalimetallsalze von Sulfonsäuren enthalten. Auch in der EP-A 180 648 werden thermoplastische Formmassen auf der Basis von Polyestern und Polycarbonaten beschrieben, die Metallsalze organischer Sulfonsäuren enthalten können. In der DE-B 14 69 143 werden Polyesterformmassen beschrieben, die eine Verbindung mit mindestens einer Sulfonsäureestergruppe, aber keine funktionelle Esterbildungsgruppe enthalten.

Alle diese beschriebenen Formmassen weisen eine befriedigende Schlagzähigkeit auf, doch ist ihre Eigenfarbe (gelb) für manche Anwendungszwecke nicht akzeptabel und auch die Wärmeformbeständigkeit läßt zu wünschen übrig.

Aufgabe der vorliegenden Erfindung war es daher, thermoplastische Formmassen auf der Basis von Polyestern und Polycarbonaten zur Verfügung zu stellen, die neben einer guten Schlagzähigkeit bei tiefen Temperaturen auch eine gute Wärmeformbeständigkeit aufweisen und weiß oder nur schwach gefärbt sind.

Diese Aufgabe wird erfindungsgemäß durch die eingangs definierten thermoplastischen Formmassen gelöst.

Die in den erfindungsgemäßen Formmassen enthaltenen Polyester sind an sich bekannt und in der Literatur beschrieben. Vorzugsweise werden Polyester verwendet, die einen aromatischen Ring in der Hauptkette enthalten.

Der aromatische Ring kann auch substituiert sein, z.B. durch Halogene wie Chlor und Brom und durch $C_1$-$C_4$-Alkylgruppen, wie die Methyl-, Ethyl-, i- und n-Propyl- und i-, n- und t-Butylgruppe.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecansäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie deren esterbildende Derivate eingesetzt werden.

Polyester aus Terephthalsäure und einer $C_2$-$C_6$-Diolkomponente, wie Polyethylenterephthalat oder Polybutylenterephthalat werden besonders bevorzugt.

Die relative Viskosität $\eta_{spec}/c$ der Polyester, gemessen an einer 0,5%igen Lösung in einem Phenol/o-Dichlorbenzolgemisch (Gewichtsverhältnis 3 :2) bei 25°C, liegt im allgemeinen im Bereich von 1,2 bis 1,8.

Der Anteil der Polyester A) an den erfindungsgemäßen Formmassen beträgt 10 bis 89,99, vorzugsweise 15 bis 80, insbesondere 20 bis 75 Gew.%, bezogen auf das Gesamtgewicht der Formmassen.

Die Polycarbonate B) sind an sich ebenfalls bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie z.B. in der Monographie von H. Schnell, "Chemistry and Physics of Polycarbonates", (Interscience

Publishers, 1964) sowie der US-A-2 999 835 und der DE-A-22 48 817 genannt sind. Dihydroxydiphenyl, Di-(hydroxyphenyl)-alkane und Di-(hydroxyphenyl)ether oder deren Mischungen sind besonders bevorzugte Diphenole.

Ein besonders bevorzugtes Diphenol ist 2,2-Di-(4'-hydroxyphenyl)propan (Bisphenol A). Dies kann auch in Mischung mit anderen Diphenolen wie 2,2-Di-(4'-hydroxyphenyl)pentan, 2,6-Dihydroxynaphthalin, 4,4'-Dihydroxydiphenylsulfon, Di-(4-hydroxyphenyl)ether, Di-(4-hydroxyphenyl)sulfit, Di-(4-hydroxyphenyl-)methan, 1,1-Di-(4'-hydroxyphenyl)ethan oder 4,4-Dihydroxydiphenyl eingesetzt werden. Der Anteil an Bisphenol A in derartigen Mischungen liegt im allgemeinen im Bereich von 70 bis 98 Gew.%.

Verfahren zur Herstellung derartiger Polycarbonate sind an sich bekannt und z.B. in den bereits erwähnten US-A-2 999 835 und DE-A-22 48 817 sowie den DE-A-13 00 266 und DE-A-14 95 730 beschrieben.

Die relative Viskosität der Polycarbonate B) liegt im allgemeinen im Bereich von 1,2 bis 1,5, vorzugsweise 1,28 bis 1,40 dl/g, gemessen in 0,5 gew.%iger Lösung in Dichlormethan bei 25°C.

Der Anteil der Polycarbonate B) beträgt 10 bis 89,99, vorzugsweise 15 bis 78 und insbesondere 20 bis 65 Gew.%, bezogen auf das Gesamtgewicht der Komponenten A) bis D).

Als wesentliche Komponente enthalten die erfindungsgemäßen Formmassen eine der Komponenten $C_1$) oder $C_2$) wie eingangs definiert.

Prinzipiell lassen sich auch Mischungen aus Komponenten $C_1$) und $C_2$) einsetzen, doch hat sich im allgemeinen der Einsatz nur einer Komponente als besonders vorteilhaft herausgestellt.

Bei der Komponente $C_1$) handelt es sich um niedermolekulare organische Verbindungen mit bis zu 70 C-Atomen und ($-SO_3$)H oder $OSO_3H$-Gruppen. Das Molekulargewicht der Komponente $C_1$) beträgt vorteilhafterweise nicht mehr als 1000.

Der Anteil der Komponente $C_1$) beträgt 0,01 bis 1, vorzugsweise 0,02 bis 0,5 Gew.%, bezogen auf das Gesamtgewicht der Komponenten A) bis D).

Als erste Gruppe solcher Verbindungen seien hier Sulfonsäuren mit einer oder mehreren Sulfonsäuregruppen genannt, die gegebenenfalls auch noch Carboxylgruppen enthalten können.

Bevorzugte Verbindungen dieser Art haben allgemeine Strukturen

$$R^1-SO_3^-$$

$$^-O_3S-R^2-SO_3^-$$

$$R^3-\underset{\displaystyle COO^-}{\underset{|}{CH}}-R^4-SO_3^-$$

wobei $R^1$, $R^2$ und $R^3$ jeweils ein- oder zweiwertige Alkyl-, Alkenyl- oder Arylgruppen mit bis zu 30 C-Atomen und $R^4$ ebenfalls einen solchen Rest oder eine chemische Bindung darstellen, wobei diese Gruppen noch substituiert sein können oder weitere funktionelle Gruppen oder Substituenten wie ($-O-CH_2-CH_2$)- oder ($O-CH_2-CH_2-CH_2-CH_2$)-Einheiten, Carboxylgruppen oder Halogensubstituenten aufweisen können.

Als besonders bevorzugte Beispiele seien hier $C_9$-$C_{22}$-Alkylsulfonsäuren wie Decylsulfonsäure, Dodecylsulfonsäure oder Octadecylsulfonsäure, ungesättigte $C_9$-$C_{22}$Alken-Sulfonsäuren, d.h. ungesättigte sulfonierte Fettsäuren wie Linolensäure, $C_8$-$C_{25}$-Hydroxyalkensulfonsäuren, $C_8$-$C_{15}$-Perfluoralkansulfonsäuren wie, Derivate der Sulfobernsteinsäure, $C_1$-$C_{25}$-Alkylbenzolsulfonsäuren und $C_1$-$C_{25}$-Alkylnaphthalinsulfonsäuren wie Diisobutylnaphthalin-1-sulfonsäuren oder auch die entsprechenden unsubstituierten Säuren, genannt.

Als Beispiele für Verbindungen mit $O-CH_2-CH_2$-Einheiten im Molekül seien hier nur

$$n-C_{12}H_{25}-(O-CH_2-CH_2)_6-SO_3H$$

und

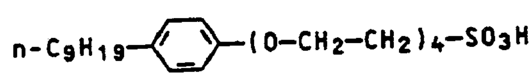

angeführt.

Als zweite Gruppe von Verbindungen, die als Komponente $C_1$) eingesetzt werden, sind organische Schwefelsäurehalbester, vorzugsweise solche der allgemeinen Formeln

$$R^1-O-SO_3H$$

$$HO_3SO-R^2-OSO_3H$$

$$R^3-CH-R^4-OSO_3H$$
$$|$$
$$COOH$$

wobei $R^1$, $R^2$, $R^3$ und $R^4$ die zuvor definierte Bedeutung haben.

Als Beispiele seien hier $C_5$-$C_{30}$-Alkylhydrogensulfate, $C_5$-$C_{30}$-Alkenylhydrogensulfate, Oligoethylenoxidhydrogensulfate mit 2 bis 20 Ethylenoxideinheiten, Oligohydrogensulfate mit 2 bis 12 Butandiol-1,4-Einheiten, Arylhydrogensulfate, ggf. mit $C_1$-$C_{12}$-Alkylgruppen substituiert und Hydrogensulfate, die durch Veresterung von $H_2SO_4$ mit Alkoholen oder Phenolen, die bis zu 10 O-$CH_2$-$CH_2$-Einheiten in der Kette aufweisen können, erhältlich sind, genannt.

Als besonders bevorzugt seien hier Butylhydrogensulfat, Ethylhexylhydrogensulfat, Hexadecen-1-olhydrogensulfat, $C_{15}H_{31}$-(O-$CH_2$-$CH_2$)$_3$-O-$SO_3H$, $C_{12}H_{25}$-(O-$CH_2$-$CH_2$-$CH_2CH_2$)$_2$-$OSO_3H$, Isooctylphenolhydrogensulfat und $C_9H_{13}$-$C_6H_4$-[O-$CH_2$-$CH_2$]$_4$-$SO_3H$ genannt

Verfahren zur Herstellung der vorstehend genannten Sulfonsäuren bzw. organischen Schwefelsäurehalbester wie auch die Verbindungen selbst sind an sich bekannt und in der Literatur beschrieben, so daß sich hier nähere Angaben erübrigen.

Wenn auch vorstehend bevorzugte Gruppen von Verbindungen als Komponente C) beschrieben wurden, so muß doch betont werden, daß prinzipiell jede Verbindung mit einer $SO_3H$- oder $OSO_3H$-Gruppe, die mit den anderen Komponenten der Formmassen nicht vollkommen unverträglich ist, eingesetzt werden kann.

Bei der Komponente $C_2$) handelt es sich um ein Polymeres mit Sulfonsäuregruppen und einem Gewichtsmittel des Molekulargewichtes von mindestens 1000, vorzugsweise von 2000 bis 100.000, insbesondere von 10.000 bis 500.000.

Solche Polymere können z.B. durch polymeranaloge Reaktion von Polymerenunter Einbau von Sulfonsäuregruppen erhalten werden. Derartige Reaktionen sind an sich bekannt und z.B. bei E. Fettes, "Chemical Reactions of Polymers", Interscience Publishers, oder C. Carraher, "Modification of Polymers" in "Polymer Science and Technology", Bd. 21 (1983), beschrieben. Auch nach der US-A-3 870 841 sind derartige Produkte erhältlich.

Im allgemeinen sind in diesen Produkten in 0,1 bis 50, vorzugsweise 0,1 bis 15 Gew.% der wiederkehrenden Monomereinheiten Sulfonsäuregruppen eingebaut.

Als Beispiele seien hier sulfoniertes Polystyrol, welches vernetzt, vorzugsweise jedoch unvernetzt eingesetzt werden kann, oder sulfonierte Kautschuke, z.B. des Typs wie sie für die Komponente D) noch beschrieben werden, insbesondere Ethylen-Propylen (EP)- oder Ethylen-Propylen-Dien-(EPDM)-Kautschuke und sulfonierte Polykondensate genannt.

Polymere C) sind auch durch Polykondensation von Sulfonsäuregruppen enthaltenden Monomeren, z.B. von Diolen, wie sie für die Herstellung der Polycarbonate B) beschrieben wurden, erhältlich. Die Polykondensationsbedingungen sind an sich bekannt und in der Literatur beschrieben, so daß sich hier nähere Angaben erübrigen.

Auch Polysulfone, die Einheiten von Di-(4-hydroxyphenyl)-sulfon mit sulfoniertem aromatischen Ring enthalten, sind hier zu nennen.

Bei der Polymerisation von Sulfonsäuregruppen enthaltenden Monomeren werden vorzugsweise weitere Comonomere eingesetzt, die keine Sulfonsäuregruppen tragen, so daß man Copolymere erhält, in denen 0,1 bis 50, vorzugsweise 0,5 bis 10% der wiederkehrenden Monomereinheiten Sulfonsäuregruppen aufweisen.

Als Sulfongruppen enthaltende Monomere seien für diese Variante Styrol-Derivate, z.B. p-Styrolsulfonsäure oder Monomere, die sich von Acrylaten oder Methacrylaten ableiten, wie 2-Sulfoethylmethacrylat oder 2-Acryl-amido-2-methyl-propensulfonsäure, genannt.

Comonomere ohne Sulfonsäuregruppen sind z.B. Styrol, α-Methylstyrol, p-Methylstyrol, Acryl- und Methacrylsäureester, Acryl- und Methacrylnitril, Acryl- und Merthacrylamid sowie Olefine wie Ethen oder Propen und Diene, z.B. Butadien.

Der Anteil des Polymeren C) an den erfindungsgemäßen Formmassen beträgt 0,01 bis 30 Gew.%, wobei Polymere mit einer Glasübergangstemperatur von mehr als 40°C, vorzugsweise in Mengen von 0,1 bis 10 Gew.% und solche mit einer Glasübergangstemperatur von unter 20°C in Mengen von 1 bis 30 Gew.% eingesetzt werden.

Aus der vorstehenden Beschreibung der Komponente C) geht hervor, daß diese auch als schlagzähmodifizierender Kautschuk dienen kann, so daß sich der Anteil der Komponente D) entsprechend verringern läßt.

Als Komponente D) enthalten die erfindungsgemäßen thermoplastischen Formmassen 0 bis 30, vorzugsweise 2 bis 25, insbesondere 5 bis 15 Gew.%, bezogen auf das Gesamtgewicht der Komponenten A) bis D) eines die Schlagzähigkeit erhöhenden Elastomeren (Kautschuks) mit einer Glasübergangstemperatur von vorzugsweise unter -30°C, insbesondere von unter -40°C.

Ganz allgemein handelt es sich dabei um Copolymerisate die bevorzugt aus mindestens zwei der folgenden Monomeren aufgebaut sind : Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propyleneinheiten im Bereich von 20 :80 bis 65 :35 aufweisen.

Die Mooney-Viskositäten (MLI+4/100°C) solcher unvernetzter EPM bzw. EPDM-Kautschuke (Gelgehalte im allgemeinen unter 1 Gew.%) liegen beovrzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadiene, Cyclohyexadiene, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, Ethyliden-2-norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäure und/oder deren Estern, insbesondere solche, die zusätzlich noch Epoxy-Gruppen enthalten. Diese Epoxygruppen werden vorzugsweise durch Zugabe von Epoxygruppen-enthaltenden Monomeren der allgemeinen Formeln II oder III zum Monomerengemisch in den Kautschuk eingebaut

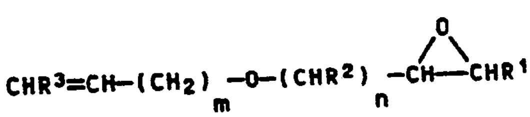 (II)

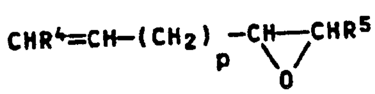 (III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff und m hat den Wert 0 oder 1 und n ist 1. Die entsprechenden Verbindungen sind Allylglycidylether oder Vinylglycidylether.

Bevorzugte Verbindungen der Formel II sind Epoxygruppen enthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate D) aus

50 bis 98, insbesondere 60 bis 95 Gew.% Ethylen,
1 bis 40, insbesondere 3 bis 20 Gew.% Glycidylacrylat und/oder Glycidylmethacrylat,
1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die Acrylnitril-Butadien-Styrol (ABS)-Polymerisate zu nennen, wie sie in den DE-A-20 35 390, DE-A-22 48 242 und der EP-A-22 216 beschrieben werden, wobei letztere besonders bevorzugt sind.

Als Kautschuk D) können auch Pfropfpolymerisate aus

25 bis 98 Gew.% eines Acrylatkautschuks mit einer Glasübergangstemperatur von unter -20°C als Pfropfgrundlage (Basispolymer)

und

2 bis 75 Gew.% eines copolymerisierbaren ethylenisch ungesättigten Monomeren, dessen Homo- bzw. Copolymerisate eine übergangstemperatur von mehr als 25°C aufweisen, als Pfropfauflage (Pfropfhülle) eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halolgenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt, oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 156 un der EP-A-50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfopfausbeute, d.h. der Quotient aus der Menge des aufgepfropften Monomeren und der Menge des eingesetzten Pfropfmonomeren liegt im allgemeinen im Bereich von 20 bis 80%.

Kautschuke auf der Basis von Acrylaten, die erfindungsgemäß verwendet werden können, werden z.B. in der DE-A-24 44 584 und der DE-A-27 26 256 beschrieben.

Die Kautschuke D) weisen vorzugsweise ein Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten Kautschuktypen eingesetzt werden können.

Neben den Komponenten A) bis D) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie

Farbstoffe und Pigmente, faser- und pulverförmige Füll- und Verstärkungsmittel, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium- und Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und deren Mischungen, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäureester (Alkylester) und -amide sowie die Ester des Pentaerythrits mit langkettigen Fettsäuren.

Ferner können organische Farbstoffe wie Nigrosin, Pigmente, z.B. Titandioxid, Cadmiumsulfid, Cadmiumsulfidselenid, Phthalocyanine, Ultramarinblau oder Ruß zugesetzt werden. Darüber hinaus können die erfindungsgemäßen Formmassen faser- und pulverförmige Füllstoffe und Verstärkungsmittel wie Kohlenstoffasern, Glasfasern, amorphe Kieselsäure, Calciumsilicat, Calciummetasilicat, Magnesiumcarbonat, Kaolin, Kreide, gepulverten Quarz, Glimmer und Feldspat in Mengen bis zu 50 Gew.%, bezogen auf die Komponenten A) bis D) enthalten. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A) bis D) angewandt werden.

Die erfindungsgemäßen thermoplastischen Formmassen können hergestellt werden, indem man die Komponenten A), B) und C) und ggf. Zusatzstoffe mischt und in üblichen Mischvorrichtungen, wie Schneckenextrudern, Brabender-Mühlen oder Banbury-Mühlen die Elastomeren (Kautschuke) D) in das schmelzflüssige Gemisch aus Polyester und Polycarbonat einmischt. Die Masse kann anschließend extrudiert, gekühlt und zerkleinert werden. Die Mischtemperaturen liegen in der Regel bei 240 bis 280°C.

Die erfindungsgemäßen Formmassen eignen sich zur Herstellung von hochbeanspruchbaren thermostabilen schlagzähen Formteilen für technische Zwecke aller Art nach dem Spritzguß- oder Extrusionsverfahren.

Sie zeichnen sich durch eine besonders helle Eigenfarbe sowie gute Kälteschlagzähigkeit bei gleichzeitig guter Wärmeformbeständigkeit aus.

Beispiele 1 bis 17

Zur Herstellung erfindungsgemäßer Formmassen wurden folgende Komponenten eingesetzt :

Komponente A/1

Polyethylenterephthalat mit einer relativen Viskosität von 1,38 (0,5 gew.%ige Lösung in Phenol/o-Dichlorbenzol 1 :1 bei 25°C).

Komponente A/2

Polybutylenterephthalat mit einer relativen Viskosität von 1,6 (bestimmt wie bei $A_1$).

Komponente B

Polycarbonat auf Bisphenol A-Basis mit einer relativen Viskosität von 1,36 (0,5 gew.%ig in Dichlormethan bei 25°C).

Komponente $C_1$/1

Dodecylsufonsäure, n-$C_{12}H_{25}SO_3H$

Komponente $C_1$/2

Nonylhydrogensulfat, n-$C_9H_{19}$-$OSO_3H$

Komponente $C_1/3$

n-$C_{12}H_{25}(OCH_2-CH_2)_6-OSO_3H$

Komponente $C_1/4$

Diisobutyl-naphthalin-1-sulfonsäure

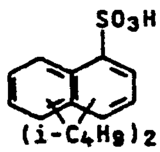

Komponente $C_1/5$

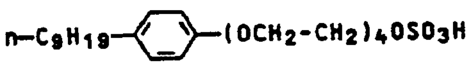

Komponente D/1

Copolymerisat aus Ethylen/n-Butylacrylat/Acrylsäure (Gewichtsverhältnis 66 :30 :4) mit einer Glasübergangstemperatur von -42°C und einem Schmelzindex (190°C/2,16 kg Belastung) von 15 g/10 min.

Komponente D/2

Copolymerisat aus Ethylen/n-Butylacrylat/Glycidylmethacrylat (Gewichtsverhältnis 67/30/3) mit einer Glasübergangstemperatur von -48°C und einem Schmelzindex von 10 g/10 min (190°C, 2,16 kg).

Komponente D/3

Pfropfkautschuk mit einer Pfropfgrundlage (75 Gew.%) aus vernetztem n-Butylacrylat und einer Pfropfhülle (25 Gew.%) aus Styrol und Acrylnitril im Gewichtsverhältnis 75/25 (hergestellt nach dem Verfahren der DE 24 44 584).

Komponente D/4

Pfropfkautschuk mit einer Pfropfgrundlage (70 Gew.%) aus vernetztem Polybutadien, 8 Gew.% einer ersten Pfropfhülle aus Styrol und 22 Gew.% einer zweiten Pfropfhülle aus Methylmethacrylat, mit einer Glasübergangstemperatur von -78°C.

Herstellung der Formmassen

Die Komponenten A) bis D) wurden intensiv gemischt, in einem Zweischneckenextruder bei 270°C aufgeschmolzen, homogenisiert und die Schmelze wurde in ein Wasserbad extrudiert. Nach Granulierung und Trocknung wurden aus den Formmassen auf einer Spritzgußmaschine Prüfkörper hergestellt und ohne Nachbehandlung geprüft.

Die Ergebnisse der Kerbschlagzähigkeitsmessungen nach DIN 53 453 und der Bestimmung der Vicat B-Temperatur nach DIN 53 460 sind der nachfolgenden Tabelle zu entnehmen.

Die Ergebnisse zeigen, daß sich die erfindungsgemäßen Formmassen durch eine sehr gute Kerbschlagzähigkeit, auch bei tiefen Temperaturen und eine weiße Farbe auszeichnen.

Tabelle:

| Nr. | Komponente (Gew.-Teile) A | B | $C_1$ | D | Farbe | Kerbschlagzähigkeit (kJ/m²) 20°C | -40°C |
|---|---|---|---|---|---|---|---|
| 1V | 40 A/2 | 50 | | 10 D/3 | gelb | 53 | 4 |
| 2V | 40 A/1 | 50 | | 10 D/3 | schw.gelb | 50 | 4 |
| 3V | 20 A/1 + 20 A/2 | 50 | | 10 D/2 | gelb | 55 | 5 |
| 4V | 40 A/2 | 50 | 0,1 Stearinsäure | 10 D/2 | tiefgelb | 10 | 1 |
| 5 | 40 A/2 | 50 | 0,1 $C_1$/1 | 10 D/3 | weiß | 57 | 8 |
| 6 | 40 A/2 | 50 | 0,09 $C_1$/1 | 10 D/4 | weiß | 60 | 10 |
| 7 | 40 A/2 | 50 | 0,1 $C_1$/1 | 10 D/2 | weiß | 55 | 8 |
| 8 | 20 A/1 + 20 A/2 | 50 | 0,1 $C_1$/2 | 10 D/3 | weiß | 54 | 7 |
| 9 | 40 A/1 | 50 | 0,09 $C_1$/1 | 10 D/4 | weiß | 61 | 11 |
| 10 | 40 A/1 | 50 | 0,01 $C_1$/1 | 10 D/2 | weiß | 57 | 9 |
| 11 | 40 A/2 | 50 | 0,05 $C_1$/3 | 10 D/1 | weiß | 58 | 10 |
| 12 | 30 A/2 | 60 | 0,03 $C_1$/4 | 10 D/2 | weiß | 60 | 12 |
| 13 | 40 A/2 | 50 | 0,08 $C_1$/5 | 10 D/3 | weiß | 55 | 7 |
| 14V | 50 A/2 | 50 | - | - | gelb | 3 | 3 |
| 15V | 50 A/1 | 50 | - | - | gelb | 3 | 2 |
| 16 | 50 A/2 | 50 | 0,1 $C_1$/1 | - | weiß | 7 | 5 |
| 17 | 50 A/1 | 50 | 0,05 $C_1$/1 | - | weiß | 7 | 4 |

Beispiele 18 bis 37

Zur Herstellung erfindungsgemäßer Formmassen wurden folgende Komponenten eingesetzt:
Die Komponenten A), B) und D) entsprechen den in den Beispielen 1 bis 17 eingesetzten Komponenten.

Komponente $C_2$/1

Sulfonierter EPDM-Kautschuk (Monomer-Gewichtsverhältnis Ethylen-Propylen-Norbornadien 70-23-7) mit einem Molekulargewicht (Gewichtsmittel) von $\overline{M}_w$ 50.000 und durchschnittlich 14 Sulfonsäuregruppen pro Mol Polymer.

Komponente $C_2$/2

Sulfoniertes Polystyrol($\overline{M}_w$ 100.000) mit durchschnittlich 85 Sulfonsäuregruppen pro Mol des Polymeren.

Komponente $C_2$/3

Polysulfon auf Basis Bisphenol A (2,2'-Di(4-hydroxyphenyl)propan) und 4,4'-Dihydroxydiphenylsulfon mit 2 Gew.% an kernsulfoniertem 4,4'-Dihydroxydiphenylsulfon (durchschnittlich eine Sulfonsäuregruppe pro Molekül) und einem Molekulargewicht $\overline{M}_w$ von 8000.

Komponente $C_2$/4

Pfropfcopolymerisat, hergestellt nach an sich bekannter Weise, mit einem Kern aus 70 Gew.% Butadien, einer ersten Hülle aus 10 Gew.% Styrol und einer zweiten Hülle aus 6 Gew.% Methylmethacrylat, 2 Gew.% n-Butylacrylat und 2 Gew.% 2-Sulfoethylmethacrylat.

Herstellung der Formmassenn

Die Komponenten A) bis C) wurden intensiv gemischt, in einem Zweischneckenextruder bei 270°C aufgeschmolzen, homogenisiert und die Schmelze wurde in ein Wasserbad extrudiert. Nach Granulierung und Trocknung wurden aus den Formmassen auf einer Spritzgußmaschine Prüfkörper hergestellt und ohne Nachbehandlung geprüft.

Die Ergebnisse der Kerbschlagzähigkeitsmessungen nach DIN 53 453 und der Bestimmung der Vicat B-Temperatur nach DIN 53 460 sind der nachfolgenden Tabelle zu entnehmen.

Die Ergebnisse zeigen, daß sich die erfindungsgemäßen Formmassen durch eine sehr gute Kerbschlagzähigkeit, auch bei tiefen Temperaturen und eine weiße Farbe auszeichnen.

**Tabelle:**

| Beispiel Nr. | Komponente [Gew.%] A | B | C | D | Kerbschlagzähigkeit DIN 53 735 (kJ/m²) 23°C | -40°C | Farbe | Vicat B DIN 53460 °C |
|---|---|---|---|---|---|---|---|---|
| 18V | 40 A/2 | 50 | - | 10 D/3 | 53 | 4 | gelb | 81 |
| 19V | 40 A/1 | 50 | - | 10 D/3 | 50 | 4 | schw.gelb | 79 |
| 20V | 20 A/1 + 20 A/2 | 50 | - | 10 D/2 | 55 | 5 | gelb | 80 |
| 21 | 40 A/2 | 50 | 1 $C_2$/2 | 9 D/2 | 54 | 10 | weiß | 120 |
| 22. | 38 A/2 | 47,5 | 5 $C_2$/3 | 9,5 D/2 | 55 | 10 | weiß | 125 |
| 23 | 40 A/2 | 50 | 1 $C_2$/2 | 9 D/3 | 54 | 8 | weiß | 122 |
| 24 | 20 A/1 + 20 A/2 | 50 | 1 $C_2$/2 | 9 D/2 | 57 | 9 | weiß | 122 |
| 25 | 40 A/1 | 50 | 0,5 $C_2$/2 | 9,5 D/3 | 55 | 7 | weiß | 136 |
| 26 | 20 A/1 | 50 | 0,3 $C_2$/2 | 9,7 D/2 | 60 | 15 | weiß | 138 |
| 27 | 28,8 A/1 | 48,5 | 3,0 $C_2$/3 | 9,7 D/3 | 58 | 12 | weiß | 137 |
| 28V | 40 A/2 | 50 | - | 10 D/4 | 55 | 7 | gelb | 80 |
| 29V | 40 A/1 | 50 | - | 10 D/4 | 54 | 7 | schw.gelb | 83 |
| 30V | 40 A/2 | 50 | - | 10 D/4 | 50 | 4 | gelb | 82 |
| 31 | 40 A/2 | 50 | 10 $C_2$/4 | - | 60 | 12 | weiß | 82 |
| 32 | 40 A/2 | 50 | 10 $C_2$/1 | 5 D/2 | 58 | 10 | weiß | 122 |
| 33 | 40 A/2 | 50 | 5 $C_2$/1 | 5 D/2 | 58 | 10 | weiß | 120 |
| 34 | 40 A/1 | 50 | 10 $C_2$/4 | - | 58 | 12 | weiß | 135 |
| 35 | 40 A/1 | 50 | 10 $C_2$/1 | - | 61 | 9 | weiß | 137 |
| 36 | 20 A/1 + 20 A/2 | 50 | 10 $C_2$/4 | - | 60 | 13 | weiß | 120 |
| 37 | 20 A/1 | 70 | 5 $C_2$/1 | 5 D/2 | 62 | 16 | weiß | 138 |

Mit V gekennzeichnete Beispiele sind Vergleichsbeispiele

**Ansprüche**

1. Thermoplastische Formmassen, enthaltend als wesentliche Komponenten A) 10 bis 89,99 Gew.-% eines Polyesters B) 10 bis 89,99 Gew.-% eines Polycarbonats und $C_1$) 0,01 bis 1 Gew.-% einer niedermolekularen organischen Verbindung mit bis zu 70 C-Atomen und (-$SO_3$)H oder -$OSO_3$H Gruppen und/oder $C_2$) 0,01 bis 30 Gew.-% eines Polymeren mit Sulfonsäuregruppen und einem Gewichtsmittel des Molekulargewichts von mindestens 1000, sowie als weitere Komponente D) 0 bis 30 Gew.-% eines schlagzäh modifizierenden Kautschuks

2. Verwendung der thermoplastischen Formmassen gemäß Anspruch 1 zur Herstellung von Formkörpern.

3. Formkörper, erhältlich aus Formmassen gemäß Anspruch 1.

**Revendications**

1. Matières à mouler thermoplastiques qui contiennent, à titre de oomposants essentiels, A) 10 à 89,99% en poids d'un polyester, B) 10 à 89,99% en poids d'un polycarbonate et $C_1$) 0,01 à 1% en poids d'un composé organique de faible poids moléculaire, comportant jusqu'à 70 atomes de carbone et des radicaux (-$SO_3$)H ou -$OSO_3$H et/ou $C_2$) 0,01 à 30% en poids d'un polymère comportant des radicaux acide sulfonique et une moyenne pondérale du poids moléculaire d'au moins 1000, comme aussi, à titre de composant supplémentaire, D) 0 à 30% en poids d'un caoutchouc modifié pour résister au choc.

2. Utilisation des matières à mouler thermoplastiques suivant la revendication 1 pour la fabrication de corps ou articles moulés.

3. Corps ou articles moulés que l'on peut obtenir par la mise en oeuvre des matières à mouler suivant la revendication 1.

**Claims**

1. A thermoplastic molding material containing, as essential components, A) from 10 to 89.99% by weight of a polyester, B) from 10 to 89.99% by weight of a polycarbonate and $C_1$) from 0.01 to 1% by weight of a low molecular weight organic compound of not more than 70 carbon atoms and (-$SO_3$)H or -$OSO_3$H groups and/or $C_2$) from 0.01 to 30% by weight of a polymer containing sulfo groups and having a weight average molecular weight of not less than 1000, and, as a further component, D) from 0 to 30% by weight of a rubber impact modifier.

2. Use of a thermoplastic molding material as claimed in claim 1, for the production of moldings.

3. A molding obtainable from a molding material as claimed in claim 1.